(19) Europäisches Patentamt
European Patent Office
Office européen des brevets

(11) Publication number: **0 059 280**
**B1**

(12) **EUROPEAN PATENT SPECIFICATION**

(45) Date of publication of patent specification: **02.01.85**

(51) Int. Cl.[4]: **C 01 B 25/41** // C11D3/06

(21) Application number: **81300883.6**

(22) Date of filing: **03.03.81**

(54) **Preparation of granular sodium tripolyphosphate products.**

(43) Date of publication of application:
**08.09.82 Bulletin 82/36**

(45) Publication of the grant of the patent:
**02.01.85 Bulletin 85/01**

(84) Designated Contracting States:
**BE CH DE FR GB IT LI NL SE**

(56) References cited:
**AU-B-434 205**
**FR-A-2 372 767**
**GB-A-1 312 604**
**GB-A-1 321 228**
**GB-A-1 324 363**
**GB-A-1 326 974**
**GB-A-1 484 223**

**The file contains technical information submitted after the application was filed and not included in this specification**

(73) Proprietor: **FMC Corporation**
**2000 Market Street**
**Philadelphia Pennsylvania 19103 (US)**

(72) Inventor: **Hensler, Paul Leonard**
**2830 Missouri Street**
**Lawrence Kansas 66044 (US)**
Inventor: **Church, Delmar Fleming**
**1018 Wellington Road**
**Lawrence Kansas 66044 (US)**
Inventor: **Beger, Robert William**
**1335 Brier Wood**
**Mount Zion Illinois 62549 (US)**

(74) Representative: **Warden, John Christopher et al**
**R.G.C. Jenkins & Co. 12-15, Fetter Lane**
**London EC4A 1PL (GB)**

**EP 0 059 280 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for preparing granular sodium tripolyphosphate (STPP) products having low friability, high absorptivity and a bulk density within the range of from about 0.65 to about 0.87 g/cm$^3$, wherein there is employed as the feed, a dense rotary dried STPP material having a bulk density of at least 0.9 g/cm$^3$ and a particle size distribution as defined hereinafter.

In the formulation of modern detergent compositions, granular STPP has come into widespread use as a phosphate "builder" which increases the cleaning ability of these detergent compositions. STPP is produced by initially reacting phosphoric acid and an alkaline compound such as sodium hydroxide or sodium carbonate together in an aqueous solution such that the molar ratio of sodium to phosphorus is on the order of about 1.67. This reaction results in the formation of an aqueous mixture containing monosodium orthophosphate and disodium orthophosphate in a mole ratio of about 1:2.

STPP can be produced therefrom in either a rotary kiln or a spray dryer. In the case of the rotary kiln, the free water is removed from the phosphate mixture by passing it through a heating zone where it is progressively heated to higher temperatures. At a temperature of about 250°C or higher, STPP is formed.

While the exact mole ratio of sodium to phosphorus in the aqueous orthophosphate solution which is employed may be varied, the ultimate reaction takes place in accordance with the following equation:

$$NaH_2PO_4+2Na_2HPO_4 \rightarrow Na_5P_3O_{10}+2H_2O$$

The resulting STPP is a crystalline anhydrous product capable of having two physical forms. Form I is typically produced when calcination temperatures of from about 500°C to about 600°C are employed while Form II is typically produced when calcination temperatures below about 500°C are employed.

In formulating free-flowing, essentially homogeneous detergent compositions containing a granular STPP product, the STPP employed has been manufactured so that its various physical properties suit the ultimate use of the formulation and/or the method by which the formulation is prepared. Physical properties of a granular STPP product which are generally important in preparing such compositions include bulk density, friability and absorptivity. Additionally, the dissolution time of a granular STPP product can become important as, for example, in the preparation of dry mixed automatic dishwashing detergents.

Bulk density may be defined in terms of the weight of STPP which freely flows into a container of given volume. A convenient method for measuring bulk density, and the method used herein, is the Solvay Process Method 302A described in the Solvay Technical and Engineering Service Bulletin No. 9, (page 33) issued in 1944. Typically, the low bulk density product (generally 0.45—0.59 g/cm$^3$) is used in home laundry and pre-soak detergent formulations. Medium density STPP is generally used in automatic dishwashing compositions, and the higher density product (generally greater than 0.75 g/cm$^3$) is used in formulating heavy-duty cleaners, as for example, floor and wall cleaners.

Friability relates to particle strength: the lower the percent friability, the stronger the STPP particle. Generally, particles of low friability are desired to prevent fracturing of the STPP particles during mixing, handling and transporting the detergent formulations. Friability values below 30% are generally desired for commercial use. Values below 20% are considered good and below 10% excellent.

Absorptivity relates to the ability of a particle to absorb various liquid components employed in the formulation of detergent compositions. High absorptivity values are a critical factor, for example, in formulating free-flowing detergent compositions which contain liquid surfactants, as dry mixed automatic dishwashing compositions. Absorptivity values above 10% are generally desired in formulating such compositions. Values above 15% are considered very good and above 20% excellent.

The procedures employed in measuring friability absorptivity and dissolution time are detailed below, immediately preceding Example I.

One problem faced by manufacturers is that many existing plant facilities have a limited ability for producing more than one bulk density range of granular STPP. This is the case with most rotary kiln processes, which typically produce a product having a bulk density of about 0.90 to 1.00 g/cm$^3$. Consequently, a process to which such existing plants could easily adapt, which would provide a lower bulk density granular product and thereby increase flexibility in the bulk density range that can be produced, is highly desirable. Such a process which additionally provides a granular STPP product having high absorptivity and low friability is especially desirable.

GB—A—1484223 discloses a method for the preparation of medium bulk density STPP from a finely divided STPP. This method comprises

(a) agitating the agglomerate of finely divided STPP feed material,
(b) the feed material having a particle size distribution of
at least 50% −100 mesh (−0.149 mm)

0 to 25% −50 +100 mesh (+0.149—0.287 mm)
0 to 25% +50 mesh (+0.297 mm),

(c) spraying onto the feed material an aqueous solution of sodium orthophosphate (20 to 65% dissolved salt, Na: P molar ratio of 1.67 to 1) until total amount of added salt is 8 to 15% by weight based on total weight of STPP to be produced,
(d) calcining the mixture to a temperature between 300 and 600°C, and
(e) recovering a granular STPP having a bulk density between 0.50 and 0.80 g/cm³.

FR—A—2372764 (US—A—4255274) discloses a method for producing a low bulk density and low frangibility granular STPP from finely divided STPP, which comprises:

(a) agitating a fineley divided STPP feed material,
(b) the feed material having a size distribution of
at least 70% by weight (preferably 95%) −100 mesh (−0.149 mm)
at least 95% by weight 150 mesh (−0.3 mm),
(c) spraying water onto the finely divided STPP in an amount from about 36 to 130% in excess of that stoichiometrically required to form STPP hexahydrate (this translates to a moisturised feed containing 28.6 to 40.5% water),
(d) calcining the STPP containing the added water, and,
(e) recovering granular STPP having a low bulk density (0.45—0.59 g/cm³) and a low frangibility.

GB—A—1312604 discloses a method to produce a granular STPP of high bulk density (at least 0.75 g/cm³) from finely divided STPP. The feed material, 10 to 40% under 400 mesh (−0.03 mm), the balance −40 +400 mesh (+0.03—0.4 mm), is agglomerated or granulated by spraying onto the agitated feed material an aqueous solution containing about 50% sodium orthophosphate. (The use of water in place of sodium orthophosphate solution is described as a non-advantageous possibility).

In accordance with this invention there is provided a process for producing a granular sodium tripolyphosphate product having low friability, high absorptivity and a bulk density within the range of from 0.65 g/cm³ to 0.87 g/cm³, which comprises moisturing an agitated feed material consisting of dense rotary dried sodium tripolyphosphate in essentially non-hydrated form having a bulk density of at least 0.9 g/cm³ and a particle size distribution of 40 to 65% by weight +20 mesh (+0.84 mm), 30 to 55% by weight −20 +100 mesh (−0.84 mm +0.149 mm) and 0 to 10% by weight −100 mesh (−0.149 mm), by adding a sufficient amount of water (optionally containing up to 15% of STPP or other polyphosphate salts) thereon to produce a moisturised material containing on the average between 10 and 30% by weight moisture, calcining the moisturised material to a temperature within the range of from about 300 to about 600°C and recovering said granular sodium tripolyphosphate product.

All "mesh" designations herein represent U.S.A. Standard Sieve values (ANSI/ASTM Standard E11—70).

The primary moisturisation step feed (that is feed prior to admixture with any process underized recycle material) is a dense (bulk density of 0.90 g/cm³ or greater) essentially non-hydrated rotary dried STPP material having the stipulated particle size distribution.

The primary moisturisation step feed is the actual feed where no process undersize STPP is recycled. When a continuous process is employed, however, it is preferable to recycle the process undersize material to the moisturisation step. Process undersize STPP is understood herein to constitute product screen undersize STPP particles and STPP particles (generally partially hydrated) collected from the hydrator and/or calciner exit gas stream by, for example, a dry cyclone. The unqualified expression "moisturisation step feed" is understood herein to mean the actual moisturisation step feed.

Form I and/or Form II STPP may be employed as feed to the moisturisation step. The Form I and II content of the final calcined product is essentially controlled by the material calcination temperature of the moisturised STPP (There are no Form designations in the hydrated state).

In carrying out the process of the invention, a sufficient amount of water is added to the moisturisation step feed to produce a product containing, on the average, between 10 and 30% by weight of moisture. The 10—30% amount of moisture, represents both bound and free water. Generally, the moisturization step effects an agglomeration of the hydrator feed, particularly of any fines (that is, −100 mesh (−0.149 mm) material) in said feed.

Both the amount of water added and the particle size of the moisturization step feed have been found to be factors in controlling the bulk density of the final product, the former appearing to be the more significant factor. Up to a point, increasing the amount of water added to the moisturization step feed tends to decrease the bulk density of the final product. This effect is thought to diminish and eventually reverse itself when sufficient water is present to effect a dissolution of a portion of the feed. The bulk density of the final product also tends to be reduced by decreasing the weighted average particle size of the moisturization step feed.

The term "water" is to be understood to mean pure water, or water containing minor amounts,

that is less than 15% by weight of STPP or other such polyphosphate salts. Water containing such minor amounts of STPP may be used when it is desired to recycle water in a commercial production plant obtained, for example, from the pollution control equipment.

The temperature of the water sprayed is not critical, but it is preferably within the range of from 10° to 50°C. It is generally impractical to employ temperatures greater than 80°C or temperatures below 5°C.

The moisturization step feed is subjected to agitation as the water is added. This effects a more uniform distribution of water on the feed and tends to agglomerate the feed, particularly any fines in the feed. Preferably, the moisturization step feed is agitated by rotation. Equipment in which the moisturization step may be carried out and which provide the preferred agitation include, for example, a rotary disc granulator and a rotating horizontal drum hydrator with lifting flights (see also equipment described in US Patent Nos. 3,154,496 and 3,625,902). Spraying is the most preferred method of water addition and may be done by any of the conventional spraying means, which include, for example, air atomized or pneumatic spray nozzles.

The moisturized product is then calcined to a temperature within the range of from about 300°C to about 600°C, the temperature being selected to produce the desired Form I and/or Form II content in the final STPP product. Typically, times on the order of 5 to 45 minutes are employed in reaching the selected temperature but shorter or longer times may be used where desired. Although any suitable calciner may be employed, a rotary calciner is preferred.

A single reactor which sequentially effects the moisturization and calcination steps may be used, or a separate calciner and moisturizer may be employed. The former may be desired, for example, when a rotating horizontal drum agglomerator is used in the moisturization step. In such instances, calcination may be effected by directly or indirectly heating the rotating horizontal drum.

STPP particles in the hydrator and calciner exit gas streams are preferably recovered by, for example, a dry cyclone, and recycled to the moisturization step. Generally, such recycled material contains partially hydrated STPP particles which when mixed with the recycle from the product screens and the primary moisturization step feed provide an actual moisturization step feed having on the average between about 1 and 12% moisture.

The calcined granular STPP products of the invention are recovered, generally by screening the calcinate to isolate the desired product fraction. For commercial purposes the granular product fraction isolated is generally encompassed by the fraction −16 +100 mesh (−1.19 mm +0.149 mm). Typical granular fractions isolated include, for example, −16 +94 (−1.19 mm +0.16 mm, −20 +80 (−0.84 mm +0.177 mm) and −20 +100 mesh (−0.84 mm +0.149 mm). Such fractions are provided by the present invention. Preferably, recovery of the granular STPP product includes milling, then rescreening any product screen oversize material. Further, where a continuous process is employed, the product screen undersize material is preferably recycled to the moisturization step.

Granular STPP products were obtained from the above described process having low friability, high absorptivity and a bulk density within the range of from about 0.65—0.87 g/cm$^3$. The bulk density of the primary moisturization step feed can be reduced by 0.20 to 0.25 g/cm$^3$ in carrying out the process of the invention. The above described process can be carried out in either a batch or continuous fashion, as desired. Preferably, however, the invention is carried out as a continuous process.

The examples below are given to illustrate the invention.

Friability determination procedure

Friability as described and reported herein is determined as follows: Two approximately 65 g samples (Samples 1 and 2) from a homogenized portion of the product to be tested are weighed to the nearest 0.01 g. Sample 1 is transferred to the top screen of a nest including 20 (0.84 mm), 30 (0.59 mm) and 100 mesh (0.149 mm) (US Standard) screens. The screen nest with sample is placed on a Ro Tap sieve shaker (manufactured by W. S. Tyler, Inc.) and shaken for 10 minutes. The amount of material which passed through the 100 mesh (0.149 mm) screen is weighed. The % by weight of Sample 1 which passed through the 100 mesh (0.149 mm) screen is then calculated.

Sample 2 is transferred to an essentially vertical, 1″ (25.4 mm) (diameter)x24″ (610 mm) glass tube. A nonporous, cupped device suitable for collecting dust (for example, a Soxhlet extraction thimble) is fitted over the top opening of the glass tube preferably by means of a rubber tube.

Dry air is blown upwardly through the glass tube at a rate of 0.25 SCFM (0.007 m$^3$/min) for a period of 10 minutes. The sample is thus fluidized and is maintained in a fludidized state for the 10 minute period. Thereafter, the material in the tube and in the dust collector is transferred to the top screen of a Ro Tap sieve shaker and treated in the same manner as Sample 1. Calculation is then made of the % by weight of Sample 2 which passed through the 100 mesh (0.149 mm) screen.

% Friability=% by weight of Sample 2 passed through 100 mesh (0.149 mm) screen—% by weight of Sample 1 passed through 100 mesh (0.149 mm) screen.

Absorptivity determination procedure

Absorptivity as described and reported herein is determined as follows: Twenty grams of STPP sample to be tested are thoroughly mixed with 5 ml of an octylphenoxypolyethoxy ethanol wetting

agent commercially solid as Triton® X-100 in a 250 ml beaker. Approximately 20 g of dry granular light density (0.45—0.55 g/cc) STPP particles are placed in the bottom of a centrifuge tube to absorb any excess Triton® X-100 not absorbed by the sample being tested. A perforated rubber stopper having a milk pad filter paper disc on the top thereof and an affixed wire handle, is slid down the tube and forced against the dry phosphate in the bottom of the tube. The mixture of sample being tested and Triton® X-100 is then transferred to the centrifuge tube. The tube with contents are centrifuged at a speed of about 4,000 rpm for 10 minutes. The sample with absorbed Triton® X-100, that is, the material on top of the rubber stopper, is removed from the centrifuge tube and weighed.

$$\%\ \text{absorptivity} = \frac{\text{Weight of sample with absorbed Triton® X-100} - \text{initial sample weight}}{\text{Weight of sample with absorbed Triton® X-100}} \times 100$$

Dissolution time determination procedure

Dissolution time as described and reported herein is determined as follows: Three hundred milliliters of distilled water at 21±2°C are placed in a 600 ml low form beaker (for example, a Kimax-Kimble 14005 beaker). The stirring rod of a constant rpm stirrer (for example, a Phipps-Bird multiple stirring apparatus is adjusted so that the stirring blade rests on the bottom of the low form beaker. A 36±0.1 gram sample of the material to be tested is weighed. The stirrer is turned on and adjusted to operate at 100 rpm. A timer is started, and the sample is added to the beaker in approximately 15 seconds (addition time). The time (final time) is recorded when only a few granules (less than 10) remain undissolved.

Dissolving time=Final time—Addition time

Example I

Two runs (Run A, a 5 hour run and Run B, a 3 hour run) were made using a dense (bulk density of 0.90 g/cc or greater) rotary dried STPP feed having, on the average, a particle size within the preferred distribution of 40 to 65% by weight +20 mesh (+0.84 mm), 30 to 55% by weight −20 +100 mesh (−0.84 +0.149 mm) and 0 to 10% by weight −100 mesh (−0.149 mm). The STPP was continuously fed at a rate of about 500 pounds per hour (pph) (227 Kg/hz) to a rotary drum hydrator (27 inch (686 mm) inside diameter; 14 foot (4.26 m) length; 0.2 inch per foot (16.7 mm per metre) slope) equipped with four air atomized spray nozzles. The hydrator was rotated at a speed of 22 rpm. Water, having a temperature of about 13—16°C, was sprayed onto the rotating bed of STPP at a rate sufficient to provide a calcination step feed having between 12.8 and 21.5% by weight of moisture (bound and/or free). Values for the physical measurements made on selected samples of moisturization step feed and calcination step feed (that is, the moisturized materal) taken during operation of the runs are given in Table I. Run average and range values are given for each type of measurement.

The material from the hydrator was continuously fed to a countercurrent rotary calciner (15.5 inch (0.39 m) inside diameter; 11 foot 1.5 inch (3.39 m) length) rotated at a speed of about 27 rpm. Heating was effected by a natural gas flame at the material discharge point of the calciner. The moisturized feed was calcined to a temperature of from about 440 to about 480°C. The calcined product was screened by a commercial screening operation employing 16 mesh (1.19 mm) top deck and 94 mesh (0.16 mm bottom) deck screens (product screens). Oversize material from the product screens was continuously milled and recycled to the product screens A −16 +94 mesh (−1.19 +0.16 mm) product fraction is recovered from the product screens.

Particle size distribution, bulk density, absorptivity, friability, STPP assay and Form I content measurements were made on selected samples (taken at various times during operation of the run) of the −16 +94 mesh (−1.19 +0.16 mm) product fractions. Run average and range values are given in Table I for each type of measurement.

As can be seen from the data, granular STPP products of high absorptivity (about two times that of the feed), low friability and a bulk density within the range of 0.731—0.863 g/cm$^3$ were obtained During Run B, bulk density measurements were also made on selected samples of feed; the data shows, on the average, a 0.203 g/cm$^3$ bulk density reduction from the feed for the products obtained. Further, the % assay of STPP remained about the same in carrying out the process.

Example II

The equipment and procedure employed in this example are identical to Example I except that process undersize STPP from the product screens and dry cyclone (collects undersize STPP from the hydrator and calciner exit gas streams) was continuously recycled to the moisturization step.

Two continuous runs (Run C, a 5 1/2 hour run and Run D, a 19 hour run) were made during which an STPP feed of the type described in Example I (primary feed) was fed to the hydrator at a rate of about 500 pph (226.5 kg/hz). Additionally, all process undersize STPP was continuously recycled to the moisturization step. The recycle from the cyclone contained some hydrated STPP material which when

combined with the primary feed produced an actual moisturization step feed having from about 1 to about 7% by weight moisture.

The hydrator was rotated at a speed of 22 rpm. Water having a temperature of about 13—16°C was sprayed onto the rotating bed of STPP at a rate sufficient to provide a calcination step feed having 15.3—23.4% by weight of moisture (bound and/or free).

Values for the physical measurements made on selected samples of moisturization step feed and calcination step feed taken during operation of the run are given in Table II. Run average and range values are given for each type of measurement.

The moisturized products were calcined to a temperature of from about 440 to about 480°C, in the manner described in Example I. The calcined products were then screened as in Example I, and the product screen oversize material was continuously milled and recycled to the product screens. Product screen undersize material and undersize material from the hydrator and calciner exit gas streams (collected in a dry cyclone) were continuously recycled to the moisturization step.

Particle size distribution, bulk density, absorptivity, friability, STPP assay and Form I content measurements were made on selected samples (taken at various times during operation of the run) of the −16 +94 mesh (−1.19 +0.16 mm) product fraction. Additionally, for Run D, dissolving time measurements were made on similarly selected samples. Run average and range values are given in Table II for each type of measurement.

As can be seen from the data, granular STPP products of high absorptivity, low friability and a bulk density within the range of 0.702—0.798 g/cm$^3$ were obtained. During Run D, bulk density measurements were also made on selected samples of feed; the data shows, on the average, a 0.202 g/cm$^3$ bulk density reduction from the feed for the products obtained. Further, the % assay of STPP increased, on the average, by about 4.7% in carrying out the process.

The dissolving time measurements made on selected samples taken during the operation of Run D had an average value of 3 minutes and 56 seconds. Dissolving time values between about 3 and 6 minutes are considered to be good by the industry for granular STPP products within the density range of 0.65—0.87 g/cm$^3$.

TABLE I

Production of granular STPP products from dense granular rotary dried STPP
(Without recycle of process undersize material)

Part I: Particle size distribution measurements

| Run | STPP | | % By weight through indicated U.S. standard screens | | | | | |
|---|---|---|---|---|---|---|---|---|
| | | | +12 | +16 | +20 | +30 | +50 | +100 |
| A | Moisturization step feed | average | 13.0 | 23.7 | 56.8 | 77.8 | 91.3 | 96.1 |
| | | range | 11.4—14.8 | 21.2—26.1 | 53.2—60.2 | 74.1—83.3 | 88.8—93.4 | 94.2—97.0 |
| | Product (−16 +94 mesh (−1.19 +0.16 mm) fraction) | average | 0.01 | 0.01 | 21.8 | 49.1 | 85.3 | 98.4 |
| | | range | 0.0—0.02 | 0.0—0.02 | 19.5—24.4 | 29.3—58.4 | 83.5—87.8 | 98.1—99.2 |
| B | Moisturization step feed | average | 6.1 | 14.3 | 47.3 | 75.9 | 88.5 | 94.4 |
| | | range | 4.0—8.3 | 9.9—18.4 | 42.7—50.5 | 69.1—78.7 | 87.1—91.4 | 89.5—96.4 |
| | Product (−16 + 94 mesh (−1.19 +0.16 mm) fraction) | average | 0.0 | 0.0 | 20.8 | 52.5 | 84.7 | 98.4 |
| | | range | 0.0—0.0 | 0.0—0.01 | 16.7—24.3 | 42.7—58.6 | 87.2—88.9 | 97.7—99.1 |
| | | | (+1.68 mm) | (+1.19 mm) | (+0.84 mm) | (+0.59 mm) | (+0.30 mm) | (+0.149 mm) |

TABLE I (continued)

Part II: Other physical measurements

| Run | STPP | | % Mois-ture | g/cc Bulk density | % Absorb-tivity | % Friability | % Form I | % Assay STPP |
|---|---|---|---|---|---|---|---|---|
| A | Moisturization step feed | average | | | 10.4 | | 24.5 | 89.8 |
| | | range | | | 9.5—12.2 | | 18.2—33.3 | 89.4—90.2 |
| | Calcination step feed | average | 15.6 | | | | | |
| | | range | 12.8—21.5 | | | | | |
| | Product (—16 +94 mesh —1.19 +0.16 mm fraction) | average | | 0.798 | 20.6 | 16.5 | 20.7 | 89.7 |
| | | range | | 0.731—0.863 | 19.6—21.1 | 12.8—20.7 | 14.8—38.8 | 89.4 90.0 |
| B | Moisturization step feed | average | | 0.961 | 11.1 | | 19.9 | 91.4 |
| | | range | | 0.955—0.969 | 8.7—13.5 | | 16.2—23.9 | 90.9—92.3 |
| | Calcination step feed | average | 18.7 | | | | | |
| | | range | 17.3—21.3 | | | | | |
| | Product (—16 +94 mesh —1.19 +0.16 mm fraction) | average | | 0.758 | 21.5 | 14.0 | 24.7 | 92.6 |
| | | range | | 0.735—0.781 | 20.9—21.8 | 11.1—16.0 | 20.5—28.9 | 90.4—94.0 |

TABLE II

Production of granular STPP products from dense granular rotary dried STPP
(with recycle of process undersize material)

Part I: Particle size measurements

| Run | STPP | | % By weight through Indicated US Standard screens +12 | +16 | +20 | +30 | +50 | +100 |
|---|---|---|---|---|---|---|---|---|
| C | Primary* Moisturization step feed | average | 23.6 | 28.4 | 46.5 | 64.5 | 84.0 | 91.1 |
| | | range | 15.6—31.1 | 23.0—37.2 | 38.1—63.6 | 57.1—82.1 | 79.8—92.8 | 87.8—96.1 |
| | Product (—16 +94 mesh —1.19 +0.16 mm fraction) | average | 0.01 | 0.01 | 12.9 | 44.9 | 88.0 | 99.2 |
| | | range | 0.0—0.05 | 0.0—0.06 | 11.3—14.7 | 42.8—49.2 | 87.1—88.8 | 99.1—99.2 |
| D | Primary* Moisturization step feed | average | 21.6 | 23.7 | 48.5 | 66.1 | 84.8 | 90.9 |
| | | range | 11.2—32.7 | 21.1—37.6 | 42.0—54.6 | 59.1—72.2 | 77.6—89.8 | 86.7—94.0 |
| | Product (—16 +94 mesh —1.19 +0.16 mm fraction) | average | 0.0 | 0.01 | 11.7 | 40.6 | 79.8 | 98.2 |
| | | range | 0.0—0.01 | 0.0—0.02 | 1.6—19.4 | 25.3—53.3 | 72.8—93.+ | 95.9—99.3 |
| | | | (+1.168 mm) | (+1.19 mm) | (+0.84 mm) | (+0.59 mm) | (+0.30 mm) | (+0.149 mm) |

* feed without process recycle

TABLE II (continued)

Part II: Other physical measurements

| Run | STPP | | % Moisture | g/cc Bulk density | % Absorbtivity | % Friability | % Form | % Assay STPP | Dissolving time min/sec |
|---|---|---|---|---|---|---|---|---|---|
| C | Primary* Moisturization step feed | average | | | | | | 89.3 | |
| | | range | | | | | | 88.8—89.8 | |
| | Calcination step feed | average | 19.7 | | | | | | |
| | | range | 15.3—23.0 | | | | | | |
| | Product (−16 +94 mesh −1.19 +0.16 mm fraction) | average | | 0.737 | 20.8 | 10.6 | 21.0 | 94.0 | |
| | | range | | 0.702—0.793 | 18.5—21.5 | 8.0—12.4 | 17.3—24.0 | 93.8—94.2 | |
| D | Primary* Moisturization step feed | average | | 0.958 | | | | 89.4 | |
| | | range | | 0.957—0.959 | | | | 87.0—91.1 | |
| | Calcination step feed | average | 20.5 | | | | | | |
| | | range | 17.2—23.4 | | | | | | |
| | Product (−16 +94 mesh −1.19 +0.16 mm fraction) | average | | 0.756 | 20.6 | 11.4 | 23.1 | 94.1 | 3:56 |
| | | range | | 0.732—0.798 | 18.3—22.4 | 7.8—13.3 | 14.4—34.8 | 89.9—95.7 | 3:05—4:33 |

## Claims

1. A process for producing a granular sodium tripolyphosphate product having low friability, high absorptivity and a bulk density within the range of from 0.65 g/cm³ to 0.87 g/cm³, which comprises moisturising an agitated feed material consisting of dense rotary dried sodium tripolyphosphate in essentially non-hydrated form having a bulk density of at least 0.9 g/cm³ and a particle size distribution of 40 to 65% by weight +20 mesh (+0.84 mm), 30 to 55% by weight −20 +100 mesh (−0.84 mm +0.149 mm) and 0 to 10% by weight −100 mesh (−0.149 mm), by adding a sufficient amount of water (optionally containing up to 15% of STPP or other polyphosphate salts) thereon to produce a moisturised material containing on the average between 10 and 30% by weight moisture, calcining the moisturised material to a temperature within the range of from about 300 to about 600°C and recovering said granular sodium tripolyphosphate product.

2. The process of claim 1 characterised in that the agitated feed material is continuously moisturised, the moisturised material is continuously calcined and continuously recovering the granular sodium tripolyphosphate product.

3. The process of claim 1 or 2 characterised in that the sodium tripolyphosphate feed includes product material recycled from the process.

4. The process of any preceding claim characterised in that the sodium tripolyphosphate feed is agitated by rotation.

5. The process of any preceding claim characterised in that the water is added onto the agitated sodium tripolyphosphate feed by spraying.

6. The process of any preceding claim characterised in that the granular sodium tripolyphosphate product recovered is encompassed by the fraction −16 +100 mesh (−1.19 +0.149 mm).

## Patentansprüche

1. Verfahren zur Herstellung eines gekörnten bzw. granularen Natriumtripolyphosphat-Produkts mit geringer Brüchigkeit, hohem Absorptionsvermögen und einer Schüttdichte im Bereich von 0,65 g/cm³ bis 0,87 g/cm³, dadurch gekennzeichnet, daß man ein gerührtes bzw. in Bewegung gehaltenes Beschickungsmaterial, das aus dichtem Rotations-getrocknetem Natriumtripolyphosphat in im wesentlichen nicht-hydratisierter Form mit einer Schüttdichte von zumindest 0,9 g/cm³ und einer Teilchengrößenverteilung von 40 bis 65 Gew.-% +20 mesh (+0,84 mm), 30 bis 55 Gew.-% −20 +100 mesh (−0,84 mm +0,149 mm) und 0 bis 10 Gew.-% −100 mesh (−0,149 mm) besteht, befeuchtet, indem man eine ausreichende Menge Wasser (das gegebenenfalls bis zu 15% Natriumtripolyphosphat oder andere Polyphosphatsalze enthält) zugibt, um hierdurch ein befechtetes Material zu erzeugen, das durchschnittlich zwischen 10 und 30 Gew.% Feuchtigkeit enthält, das befeuchtete Material auf eine Temperatur im Bereich von etwa 300 bis etwa 600°C calciniert und das gekörnte Natriumtripolyphosphat-Produkt gewinnt.

2. Verfahren gemäß Anspruch 1, dadurch gekennzeichnet, daß das gerührte bzw. in Bewegung gehaltene Beschickungsmaterial kontinuierlich befeuchtet wird, das befeuchtete Material kontinuierlich calciniert wird und das gekörnte Natriumtripolyphosphat-Produkt kontinuierlich gewonnen wird.

3. Verfahren gemäß Anspruch 1 oder 2, dadurch gekennzeichnet, daß die Natriumtripolyphosphat-Beschickung aus dem Verfahren recyclisiertes Produktmaterial umfaßt.

4. Verfahren gemaß einem der vorhergehenden Ansprüche, dadurch gekennzeichnet, daß die Natriumtripolyphosphat-Beschickung durch Rotation in Bewegung gehalten wird.

5. Verfahren gemäß einem der vorhergehenden Ansprüche, dadurch gekennzeichnet, daß das Wasser auf die in Bewegung gehaltene Natriumtripolyphosphat-Beschickung durch Sprühen zugegeben wird.

6. Verfahren gemäß einem der vorhergehenden Ansprüche, dadurch gekennzeichnet, daß das gewonnene gekörnte Natriumtripolyphosphat-Produkt von der Fraktion −16 +100 mesh (−1,19 +0,149 mm) umfaßt wird.

## Revendications

1. Procédé de fabrication d'un produit de tripolyphosphate de sodium granulé possédant une faible friabilité, un haut pouvoir d'absorption et une densité dans la gamme de 0,65 g/cm³ à 0,87 g/cm³, qui comprend l'humidification d'un matériau d'alimentation agité composé de tripolyphosphate de sodium dense séché dans un four tournant sous forme essentiellement non hydratée ayant une densité d'au moins 0,9 g/cm³ et une distribution de taille de particules de 40 à 65% en poids de +0,84 mm (+20 mailles), de 30 à 55% en poids de −0,84 mm +0,149 mm (−20 +100 mailles) et de 0 à 10% en poids de −0,149 mm (−100 mailles), en y ajoutant une quantité suffisante d'eau (contenant facultativement jusqu'à 15% de TPPS ou d'autres sels de polyphosphates) pour obtenir un matériau humidifié contenant en moyenne entre 10 et 30% en poids d'humidité la calcination du matériau humidifié à une température dans l'intervalle d'environ 300 à environ 600°C et la récupération dudit produit de tripolyphosphate de sodium granulé.

2. Procédé de la revendication 1 caractérisé en ce que le matériau d'alimentation agité est humidifié en continu, le matériau humidifié est calciné en continu et par la récupération en continu du produit de tripolyphosphate de sodium granulé.

3. Procédé de la revendication 1 ou de la revendication 2, caractérisé en ce que l'alimentation de tripolyphosphate de sodium comprend le matériau du produit recyclé dans le procédé.

4. Procédé de l'une quelconque des revendications précédentes, caractérisé en ce que l'alimentation de tripolyphosphate de sodium est agitée par rotation.

5. Procédé de l'une quelconque des revendications précédentes, caractérisé en ce que de l'eau est ajoutée par pulvérisation sur l'alimentation de tripolyphosphate de sodium agitée.

6. Procédé de l'une quelconque des revendications précédentes, caractérisé en ce que le produit de tripolyphosphate de sodium granulé récupéré est compris dans la fraction −1,19 +0,149 mm (−16 +100 mailles).